# EUROPÄISCHE PATENTSCHRIFT

(11) **EP 4 652 385 B1**
(45) Veröffentlichungstag und Bekanntmachung des Hinweises auf die Patenterteilung: **07.10.2026**
(21) Anmeldenummer: 24700609.1
(22) Anmeldetag: 12.01.2024
(51) Int. Cl.: F16F 7/10, F03D 80/00, E04H 9/02

(54) **SCHWINGUNGSTILGERANORDNUNG, INSBESONDERE FÜR HOHE, SCHLANKE BAUWERKE, UND VERFAHREN ZUM EINRICHTEN EINER SCHWINGUNGSTILGERANORDNUNG**
VIBRATION ABSORBER ARRANGEMENT, IN PARTICULAR FOR TALL, SLENDER CONSTRUCTIONS, AND METHOD FOR SETTING UP A VIBRATION ABSORBER ARRANGEMENT
AGENCEMENT D'AMORTISSEUR DE VIBRATIONS, EN PARTICULIER POUR CONSTRUCTIONS TRÈS MINCES, ET PROCÉDÉ DE MONTAGE D'UN AGENCEMENT D'AMORTISSEUR DE VIBRATIONS

(30) Priorität: 17.01.2023 EP 23151865
(43) Veröffentlichungstag der Anmeldung: 26.11.2025
(73) Patentinhaber: Wölfel Engineering GmbH + Co. KG, 97204 Höchberg (DE)
(72) Erfinder: ENGELHARDT, Jürgen, 97249 Eisingen (DE); KATZ, Sebastian, 97082 Würzburg (DE); ZELTNER, David, 97076 Würzburg (DE)
(74) Vertreter: Keil & Schaafhausen Patentanwälte PartGmbB
(86) Internationale Anmeldenummer: PCT/EP2024/050677
(87) Internationale Veröffentlichungsnummer: WO 2024/153551

(56) Entgegenhaltungen:
- WO-A1-2017/121633
- WO-A1-2019/154557
- JP-A- 2000 002 017
- JP-A- H1 194 017

## Beschreibung

Die vorliegende Erfindung betrifft eine Schwingungstilgeranordnung, insbesondere für hohe, schlanke Bauwerke, mit einer tragenden Struktur, einer Tilgermasse, die einen Massenschwerpunkt aufweist, mindestens einem Rad, mit dem die Tilgermasse auf einer konkav gekrümmten, mit der tragenden Struktur verbundenen Schienenanordnung aus einer stabilen Mittellage heraus in zwei entgegengesetzte Richtungen verfahrbar ist, und einer Anschlaganordnung, die für jede Bewegungsrichtung der Tilgermasse auf der Schienenanordnung einen Anschlagpuffer an der Tilgermasse und einen Anschlag, an dem der Anschlagpuffer zur Anlage kommt, aufweist.

Weiterhin betrifft die Erfindung ein Verfahren zum Einrichten einer Schwingungstilgeranordnung, insbesondere für hohe, schlanke Bauwerke, mit einer tragenden Struktur, einer Tilgermasse, die einen Massenschwerpunkt aufweist, mit mindestens einem Rad, mit dem die Tilgermasse auf einer konkav gekrümmten, mit der tragenden Struktur verbundenen Schienenanordnung aus einer stabilen Mittellage heraus in zwei entgegengesetzte Richtungen verfahrbar ist und mit einer Anschlaganordnung, die für jede Bewegungsrichtung der Tilgermasse auf der Schienenanordnung einen Anschlagpuffer an der Tilgermasse und einen Anschlag, an dem der Anschlagpuffer zur Anlage kommt, aufweist.

Eine derartige Schwingungstilgeranordnung ist beispielsweise aus EP 2 746 483 B1 bekannt.

Aus JP H11 - 94 017 A ist eine schwingungsdämpfende Vorrichtung bekannt, die an einem Bauwerk angebracht werden kann. Ein Gewicht ist in einem länglichen Gehäuse aufgenommen und entlang einer gekrümmten Bahn verschiebbar.

JP 2000 - 002 017 A beschreibt eine erbebendämpfende Vorrichtung mit einem auf einer Schiene verfahrbarem Gewicht. Der Aufprall des Gewichts an einen Kollisionsblock wird über ein Kollisionsplatte, die über Federn und Dämpfer angebunden ist, gebremst. Eine Position der Kollisionsplatte ist verstellbar.

Die Erfindung wird im Folgenden anhand des Einsatzes im Turm einer Windenergieanlage beschrieben. Sie ist aber auch bei anderen hohen und schlanken Bauwerken anwendbar, z.B. bei Schornsteinen, Antennen, Hochhäusern, Türmen oder Offshore-Bauwerken, wie Transformator-Stationen. Unter einem "hohen und schlanken Bauwerk" soll ein Bauwerk verstanden werden, das ein Verhältnis zwischen Höhe und kleinster Breite von mindestens 5 aufweist.

Der Turm einer Windenergieanlage wird zu Schwingungen angeregt, beispielsweise durch Windkräfte oder - bei Offshore-Anlagen - auch durch Wellenkräfte. Dabei schwingt der Turm mit einer relativ niedrigen Frequenz von weniger als 1 Hz. In der Regel weist der Turm einer Offshore-Windenergieanlage eine Eigenfrequenz im Bereich von 0,1 bis 0,3 Hz auf. Bei jeder Schwingungsbewegung verbiegt sich der Turm etwas, was auf Dauer zu Problemen führen kann.

Es ist daher bekannt, einen Schwingungstilger zu verwenden, dessen Tilgermasse auf einer gekrümmten Schienenanordnung hin- und herbewegt werden kann. Eine Linie, die durch den Mittelpunkt eines Rads und dem Auflagepunkt des Rads auf der Schienenanordnung verläuft, kreuzt sich mit einer entsprechenden Linie des Rades an einer anderen Position. Der Kreuzungspunkt bildet dann sozusagen die Aufhängung für ein Pendel, so dass ein Abstand zwischen diesem Kreuzungspunkt und dem Massenschwerpunkt, mit anderen Worten die Pendellänge, sehr groß gemacht werden kann.

Die tiefe Frequenz, mit der die Windenergieanlage schwingt, erfordert kleine Tilgerfrequenzen und -steifigkeiten und damit einhergehend große Tilgerwege, die aber durch Bauraumzwänge begrenzt sind. Die Tilgermasse muss sich innerhalb des Turms der Windenergieanlage bewegen können. Die Bewegung der Tilgermasse muss demnach innerhalb eines bestimmten, zur Verfügung stehenden Weges, der auf den Innenraum des Turms beschränkt ist, begrenzt werden.

Der Turm einer Windenergieanlage sollte senkrecht stehen. Eine exakte Ausrichtung des Turmes in Schwerkraftrichtung wird allerdings nur in Ausnahmefällen erreicht. Die dabei auftretende Neigung des Turms ist allerdings aus baulichen Gründen akzeptabel, weil sie sehr gering ist und deutlich unter fünf Winkelgraden liegt.

Geringe Schrägstellungen der Anlage führen allerdings dazu, dass die Tilgermasse, wenn sie sich in ihrer stabilen Mittellage befindet, nicht mehr in der Mitte der Schienenanordnung angeordnet ist.

Man hat daher vorgeschlagen, die Schwingungstilgeranordnung mit einer Nivelliereinrichtung auszurüsten, mit der es möglich ist, die Schwingungstilgeranordnung nach dem Einbau in die tragende Struktur exakt horizontal auszurichten. Dies erfordert allerdings einen relativ hohen Aufwand. Die Nivelliereinrichtung darf dabei keine negativen Auswirkungen auf die Schwingungsdämpfung haben. Auch die mit einer Nivelliereinrichtung ausgerüstete Schwingungstilgeranordnung muss in der Lage sein, die bei der Bewegung der Tilgermasse auftretenden Kräfte und die damit verbundenen Reaktionskräfte aufzunehmen.

Der Erfindung liegt die Aufgabe zugrunde, die Montage der Schwingungstilgeranordnung einfach zu gestalten.

Diese Aufgabe wird gelöst durch eine Schwingungstilgeranordnung, insbesondere für hohe, schlanke Bauwerke, mit einer tragenden Struktur, einer Tilgermasse, die einen Massenschwerpunkt aufweist, mindestens einem Rad, mit dem die Tilgermasse auf einer konkav gekrümmten, mit der tragenden Struktur verbundenen Schienenanordnung aus einer stabilen Mittellage heraus in zwei entgegengesetzte Richtungen verfahrbar ist, und einer Anschlaganordnung, die für jede Bewegungsrichtung der Tilgermasse auf der Schienenanordnung einen Anschlagpuffer an der Tilgermasse und einen Anschlag, an dem der Anschlagpuffer zur Anlage kommt, aufweist, wobei ein Abstand zwischen dem Anschlagpuffer und dem Anschlag in der stabilen Mittellage der Tilgermasse für mindestens eine Bewegungsrichtung veränderbar ist.

Die Schwingungstilgeranordnung kann dann in der tragenden Struktur montiert werden, ohne dass eine Nivelliereinrichtung betätigt werden muss, um die Schwingungstilgeranordnung horizontal auszurichten. Wenn die tragende Struktur eine Schrägstellung oder Neigung aufweist, dann befindet sich die Tilgermasse in ihrer Ruhestellung, die eine stabile Mittellage bildet, nicht mehr in der Mitte der Schienenanordnung, so dass in den beiden Bewegungsrichtungen unterschiedlich große Wege zur Verfügung stehen, in denen sich die Tilgermasse bewegen kann. Durch die Verstellung des Abstands zwischen dem Anschlagpuffer und dem Anschlag in dieser Position der Tilgermasse zumindest auf einer Seite kann man nun die beiden Abstände wieder aneinander angleichen, so dass sich die Tilgermasse in beide Bewegungsrichtungen auf der Schienenanordnung gleichartig bewegen kann. Das Verstellen des Abstands ist wesentlich einfacher als das horizontale Ausrichten der Schwingungstilgeranordnung.

**In** einer bevorzugten Ausgestaltung ist vorgesehen, dass die Anschlaganordnung bei einer Veränderung des Abstands in eine Bewegungsrichtung automatisch den Abstand in die entgegengesetzte Bewegungsrichtung gegensinnig gleich verändert. Wenn man also den Abstand auf einer Seite vergrößert, wird der Abstand auf der anderen Seite in gleichem Maße verkleinert und umgekehrt. Dies vereinfacht die Montage weiter.

Bevorzugterweise ist mindestens ein Anschlagpuffer verstellbar an der Tilgermasse angeordnet. Das Verstellen des Anschlagpuffers an der Tilgermasse ist eine relativ einfache Maßnahme, um den Abstand zwischen dem Anschlagpuffer und dem Anschlag zu verändern.

Hierbei ist bevorzugt, dass die Anschlagpuffer für beide Bewegungsrichtungen gemeinsam verstellbar an der Tilgermasse angeordnet sind. Zur Verstellung von beiden Abständen ist damit lediglich eine einzige Maßnahme erforderlich, nämlich die Position der beiden Anschlagpuffer an der Tilgermasse zu verändern. Die beiden Anschlagpuffer können hierzu beispielsweise ein gemeinsames Gehäuse aufweisen.

Vorzugsweise übertragen die jeweiligen Anschläge Anprallkräfte von den jeweiligen Anschlagpuffern auf die tragende Struktur. Dies kann dadurch bewerkstelligt werden, dass die Anschläge an der Einhausung der Schwingungstilgeranordnung befestigt sind, die wiederum starr mit der tragenden Struktur verbunden ist. Die Schwingungstilgeranordnung kann mechanisch relativ einfach aufgebaut werden.

Hierbei ist bevorzugt, dass die Anschläge steif an der tragenden Struktur befestigt sind. Die Anprallkräfte werden damit direkt in die tragende Struktur übertragen.

Vorzugsweise weisen die Anschlagpuffer ein gemeinsames Dämpfungselement auf. Das Dämpfungselement sorgt dafür, dass die Kräfte, die beim Anprallen der Tilgermasse an den Anschlag entstehen, geringgehalten werden können. Wenn man für die beiden Anschlagpuffer ein gemeinsames Dämpfungselement verwenden kann, dann kann man den zur Verfügung stehenden Bauraum besonders gut ausnutzen. Insbesondere kann man das Dämpfungselement praktisch doppelt so groß machen, verglichen mit einer Situation, wo jeder Anschlagpuffer ein eigenes Dämpfungselement benötigt. Das Dämpfungselement kann beispielsweise eine Feder oder einen hydraulischen Dämpfer oder eine FederDämpfer-Einheit aufweisen.

Hierbei ist bevorzugt, dass das Dämpfungselement einen Bremsweg definiert, der mindestens 10 % der Maximalauslenkung der Tilgermasse entspricht. Die Bewegung der Tilgermasse wird am Ende der Bewegung nicht abrupt gestoppt, sondern die Tilgermasse wird über einen relativ langen Bremsweg abgebremst, so dass Belastungen der tragenden Struktur kleingehalten werden können.

Vorzugsweise verläuft eine die beiden Anschlagpuffer verbindende Linie in einem Bereich, der sich in Schwerkraftrichtung beidseits des Massenschwerpunkts der Tilgermasse erstreckt und in Schwerkraftrichtung eine Ausdehnung von maximal 15 % der Höhe der Tilgermasse aufweist. Hierdurch ist es möglich, die Kräfte, die beim Anprallen der Tilgermasse an die tragende Struktur entstehen, wobei hier natürlich der Anpralldämpfer und der Anschlag zwischengeschaltet sind, kleinzuhalten und ein großes Kippmoment auf die Tilgermasse zu verhindern.

Vorzugsweise verläuft die Linie in Schwerkraftrichtung unterhalb des Massenschwerpunkts. Da die Bewegung der Tilgermasse durch die Pendelbewegung nicht nur eine lineare Bewegung ist, sondern auch eine Rotationskomponente hat, ist es von Vorteil, den Anschlagpuffer vertikal so versetzt zu montieren, dass beim Anprallen des Anschlagpuffers an den Anschlag ein der Drehbewegung entgegenwirkendes Drehmoment entsteht. Der Anschlagpuffer sitzt also nahe am, aber in Schwerkraftrichtung leicht unterhalb des Massenschwerpunkts der Tilgermasse.

Die oben genannte Aufgabe wird ferner gelöst durch ein Verfahren zum Einrichten einer Schwingungstilgeranordnung, insbesondere für hohe, schlanke Bauwerke, mit einer tragenden Struktur, einer Tilgermasse, die einen Massenschwerpunkt aufweist, mit mindestens einem Rad, mit dem die Tilgermasse auf einer konkav gekrümmten, mit der tragenden Struktur verbundenen Schienenanordnung aus einer stabilen Mittellage heraus in zwei entgegengesetzte Richtungen verfahrbar ist und mit einer Anschlaganordnung, die für jede Bewegungsrichtung der Tilgermasse auf der Schienenanordnung einen Anschlagpuffer an der Tilgermasse und einen Anschlag, an dem der Anschlagpuffer zur Anlage kommt, aufweist, wobei man einen Abstand zwischen dem Anschlagpuffer und dem Anschlag in der stabilen Mittellage der Tilgermasse für mindestens eine Bewegungsrichtung verändert.

Man kann dann zulassen, dass die Schwingungstilgeranordnung nicht mehr exakt horizontal ausgerichtet ist und sich die Tilgermasse nicht mehr exakt in der Mitte der Schienenanordnung befindet. Gleichwohl kann man durch die Veränderung des Abstandes zwischen dem Anschlagpuffer und dem Anschlag dafür sorgen, dass die Bewegungsmöglichkeiten der Tilgermasse in beide Schwingungsrichtungen gleich gemacht werden können.

Hierbei ist bevorzugt, dass man bei der Veränderung des Abstands in eine Bewegungsrichtung automatisch den Abstand in die entgegengesetzte Bewegungsrichtung gegensinnig gleich verändert. Diese Veränderung kann automatisch erfolgen, also ohne, dass man weitere Maßnahmen treffen muss. Wenn man den Abstand auf der einen Bewegungsrichtung verkleinert, wird der Abstand auf der anderen Seite der Bewegungsrichtung entsprechend vergrößert, so dass man die Abstände auf einfache Weise gleich machen kann.

Hierbei ist bevorzugt, dass man eine Position der Anschlagpuffer an der Tilgermasse verändert. Dies ist eine relativ einfache Maßnahme, um die Abstände aneinander anzupassen.

Vorzugsweise ordnet man die Tilgermasse in der stabilen Mittellage an und ordnet die Anschlagpuffer so an der Tilgermasse an, dass der Abstand zwischen den Anschlagpuffern und den jeweiligen Anschlägen jeweils gleich groß ist. Die Tilgermasse nimmt die stabile Mittellage automatisch an. Sollte die Tilgermasse aufgrund einer Schwingung der tragenden Struktur immer in Bewegung sein, kann man die dabei zurückgelegte Wegstrecke zwischen zwei Extrempositionen ermitteln und die Tilgermasse dann in der Mitte dieser Wegstrecke festlegen. Danach lässt sich auf einfache Weise der Abstand zwischen dem Anschlagpuffer und dem Anschlag auf einer Seite oder auf beiden Seiten verändern.

Gemäß einem Aspekt kann für die Anschlagpuffer ein gemeinsames Dämpfungselement verwendet werden.

Die Erfindung wird im Folgenden anhand eines bevorzugten Ausführungsbeispiels in Verbindung mit der Zeichnung beschrieben. Hierin zeigen:
- Fig. 1: eine schematische Ansicht einer Schwingungstilgeranordnung in einer Struktur, die in Schwerkraftrichtung ausgerichtet ist und
- Fig. 2: die Schwingungstilgeranordnung in einer Struktur, die eine Neigung zur Schwerkraftrichtung aufweist.

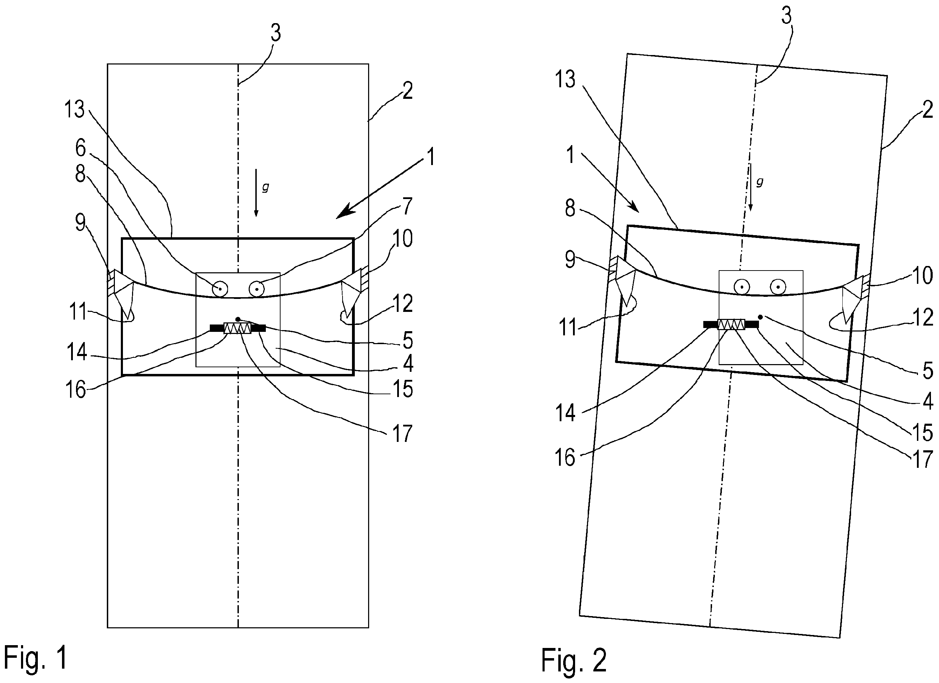

Fig. 1 zeigt eine Schwingungstilgeranordnung 1 in einer tragenden Struktur 2. Die tragende Struktur 2 ist ein hohes, schlankes Bauwerk, beispielsweise der Turm einer Windenergieanlage.

In allen Figuren sind die gleichen Elemente mit den gleichen Bezugszeichen versehen.

In der in Fig. 1 dargestellten Situation ist die tragende Struktur 2 parallel zur Schwerkraftrichtung g ausgerichtet, d.h. eine Mittelachse 3 der tragenden Struktur 2 verläuft parallel zur Schwerkraftrichtung.

Die Schwingungstilgeranordnung 1 weist eine Tilgermasse 4 mit einem Massenschwerpunkt 5 auf. Die Tilgermasse 4 ist mit Rädern 6, 7 auf einer konkav gekrümmten Schiene 8 aus einer stabilen Mittellage heraus in zwei entgegengesetzte Richtungen verfahrbar. Die stabile Mittellage ist dabei eine Position, in der sich die Tilgermasse 4 in Schwerkraftrichtung nicht mehr weiter nach unten bewegen kann. Die Tilgermasse 4 kann dabei eine Masse von mehreren Tonnen aufweisen. Sie kann beispielsweise aus Beton, aus Stahl, einer Kombination von Stahl und Beton oder aus anderen Materialien gebildet sein.

Die Tilgermasse 4 und die Schienenanordnung 8 sind in einer Einhausung 13 der Tilgeranordnung 1 angeordnet.

Die Schienenanordnung ist allerdings direkt über Anbindungselemente 9, 10 mit der tragenden Struktur 2 verbunden. Dadurch ist es möglich, die auf die Einhausung 13 wirkenden Kräfte kleinzuhalten. Es ist auch möglich, die Einhausung 13 direkt in der tragenden Struktur ausreichend steif, d.h. ohne elastische Nachgiebigkeit, zu befestigen, so dass die Einhausung 13 gleichzeitig die Anbindungselemente 9, 10 bildet.

Ein Anbindungselement 9 weist einen Anschlag 11 und das andere Anbindungselement 10 weist einen Anschlag 12 für die Bewegung der Tilgermasse 4 auf. Wenn die Einhausung 8 ausreichend steif in der tragenden Struktur 2 befestigt ist, kann die Einhausung 8 auch die Anschläge 11, 12 bilden.

Die Tilgermasse 4 weist einen ersten Anschlagpuffer 14 auf, der am ersten Anschlag 11 zur Anlage kommen kann, wenn sich die Tilgermasse 4 weit genug in diese Richtung bewegt hat. Die Tilgermasse 4 weist weiterhin einen zweiten Anschlagpuffer 15 auf, der an dem zweiten Anschlag 12 zur Anlage kommt, wenn sich die Tilgermasse 4 weit genug in die entgegengesetzte Richtung, also zum Anbindungselement 10 hin, bewegt hat.

Die beiden Anschlagpuffer 14, 15 weisen ein gemeinsames Gehäuse 16 auf, das an der Tilgermasse 4 befestigt ist. Weiterhin weisen die beiden Anschlagpuffer 14, 15 einen gemeinsamen Anpralldämpfer 17 auf. Der Anpralldämpfer 17 bewirkt, dass die Geschwindigkeit der Tilgermasse 4 am Ende ihrer Bewegung stärker abnimmt, als dies nur aufgrund der gekrümmten Schienenanordnung 8 der Fall wäre. Damit wird ein hartes Anschlagen der Tilgermasse 4 an die tragende Struktur 2 verhindert. Der Anpralldämpfer 17 definiert einen Bremsweg, der relativ lang ist. Er beträgt mindestens 10 % der Maximalauslenkung der Tilgermasse 4. Die Tilgermasse 4 wird also nicht schlagartig gestoppt, wenn der Anschlagpuffer 14, 15 zur Anlage an den Anschlag 11, 12 kommt. Die Belastung der tragenden Struktur 2 kann damit kleingehalten werden.

Die Anschlagpuffer 14, 15 sind mit ihrem Gehäuse 16 an der Tilgermasse 4 befestigt. Die Befestigung ist dabei so ausgebildet, dass die Position der Anschlagpuffer 14, 15 an der Tilgermasse 4 veränderbar und damit einstellbar ist.

Die Position der Anschlagdämpfer 14, 15 an der Tilgermasse 4 wird dabei so gewählt, dass in der dargestellten stabilen Mittellage der Tilgermasse 4 ein Abstand zwischen dem Anschlagpuffer 14 und dem ihm zugeordneten Anschlag 11 gleich einem Abstand zwischen dem anderen Anschlagpuffer 15 und dem ihm zugeordneten Anschlag 12 ist. Die Bewegungsmöglichkeiten der Tilgermasse 4 sind dabei in beide Bewegungsrichtungen auf der Schienenanordnung 8 gleich.

Fig. 1 zeigt einen Idealzustand, der in der Realität vielfach nicht erreicht wird.

Fig. 2 zeigt in einer etwas übertriebenen Darstellung die Situation, die sich ergibt, wenn die tragende Struktur 2 gegenüber der Schwerkraftrichtung g eine Neigung oder Schrägstellung aufweist. Eine derartige Situation kommt bei Türmen von Windenergieanlagen relativ häufig vor, insbesondere bei Türmen von Windenergieanlagen im Offshore-Bereich.

In Fig. 2 werden für die gleichen Elemente die gleichen Bezugszeichen wie in Fig. 1 verwendet. Die Zeichnung ist lediglich schematisch, um die Erläuterung zu vereinfachen. Bei real ausgeführten Schwingungstilgeranordnungen wird man dafür sorgen, dass die Tilgermasse 4 bei ihrer Bewegung nicht in Kontakt mit der Einhausung 13 oder der tragenden Struktur 2 kommt.

Wenn die Mittelachse 3 der tragenden Struktur 2 gegenüber der Schwerkraftrichtung g geneigt ist, dann befindet sich die stabile Mittellage der Tilgermasse 4, also die Position, in der sich die Tilgermasse 4 in Schwerkraftrichtung nicht mehr weiter nach unten bewegen kann, nicht mehr in der Mitte der Schienenanordnung 8, sondern seitlich dazu versetzt.

Um trotzdem eine Bewegung der Tilgermasse 4 in beide Bewegungsrichtungen auf der Schienenanordnung 8 gleich auszugestalten, wird mindestens ein Anschlagpuffer 14, 15, in der Regel aber beide Anschlagpuffer 14, 15, gegenüber der Tilgermasse 4 versetzt angeordnet. Mit anderen Worten wird die Position der Anschlagpuffer 14, 15 an der Tilgermasse 4 verstellt.

Wenn die beiden Anschlagpuffer 14, 15 ein gemeinsames Gehäuse 16 aufweisen, lässt sich dies einfach dadurch bewerkstelligen, dass das Gehäuse 16 an der Tilgermasse 4 an einer anderen Position befestigt wird. Damit kann man sicherstellen, dass ein Abstand zwischen dem Anschlagpuffer 14 und dem Anschlag 11 auf der einen Seite in Bewegungsrichtung genauso groß gemacht werden kann, wie ein Abstand zwischen dem Anschlagpuffer 15 und dem Anschlag 12 in die entgegengesetzte Richtung. Wenn, wie dargestellt, das Gehäuse 16 zum Anschlag 11 hinbewegt wird, dann verkleinert sich der Abstand zwischen dem Anschlagpuffer 14 und dem Anschlag 11 und vergrößert sich gleichzeitig und in gleichem Maße der Abstand zwischen dem Anschlagpuffer 15 und dem Anschlag 12. Man kann also mit einer einzigen Einstellung beide Abstände verändern.

Eine Linie, die die beiden Anschlagpuffer 14, 15 verbindet, verläuft etwa auf der Höhe des Massenschwerpunkts 5 in Schwerkraftrichtung. Diese virtuelle Linie verläuft in einem Bereich, der sich in Schwerkraftrichtung beidseits des Massenschwerpunkts 5 der Tilgermasse 4 erstreckt und in Schwerkraftrichtung eine Ausdehnung von maximal 15 % der Höhe der Tilgermasse 4 aufweist. Die Höhe der Tilgermasse 4 ist die Erstreckung der Tilgermasse 4 in Schwerkraftrichtung g.

Bevorzugt ist allerdings, wenn sich die Anschlagpuffer 14, 15 in Schwerkraftrichtung g etwas unterhalb des Massenschwerpunkts 5 der Tilgermasse 4 befinden. Da die Bewegung der Tilgermasse 4 durch die Pendelbewegung auf der gekrümmten Schienenanordnung 8 nicht nur linear ist, sondern auch eine Rotationskomponente hat, ist es von Vorteil, die Anschlagpuffer 14, 15 vertikal so versetzt, zum Massenschwerpunkt 5 zu montieren, dass beim Anprallen der Anschlagpuffer 14, 15 an den jeweiligen Anschlag 11, 12 ein der Drehbewegung entgegenwirkendes Drehmoment entsteht. Damit werden die durch das Anprallen der Tilgermasse 4 an die Anbindungselemente 9, 10 entstehenden Kräfte auf Komponenten der Schwingungstilgeranordnung 1 und der tragenden Struktur 2 kleingehalten und ein großes Kippmoment auf die Tilgermasse 4 wird vermieden.

Durch die Verstellbarkeit der Position der Anschlagpuffer 14, 15 an der Tilgermasse 4 ist es nun auf einfache Weise möglich, die Schwingungstilgeranordnung 1 in der tragenden Struktur 2 zu montieren. Nach der Montage muss man lediglich die Tilgermasse 4 in ihrer stabilen Mittellage positionieren und ggfs. dort festlegen. Danach kann man die Position der Anschlagpuffer 14, 15 an der Tilgermasse 4 so einstellen, dass die Abstände zwischen den Anschlagpuffern 14, 15 und den jeweiligen Anschlägen 11, 12 gleich groß sind.

## Patentansprüche

1. Schwingungstilgeranordnung (1), insbesondere für hohe schlanke Bauwerke, mit einer tragenden Struktur (2), einer Tilgermasse (4), die einen Massenschwerpunkt (5) aufweist, mindestens einem Rad (6, 7), mit dem die Tilgermasse (4) auf einer konkav gekrümmten, mit der tragenden Struktur (2) verbundenen Schienenanordnung (8) aus einer stabilen Mittellage heraus in zwei entgegengesetzte Richtungen verfahrbar ist, und einer Anschlaganordnung, die für jede Bewegungsrichtung der Tilgermasse auf der Schienenanordnung einen Anschlagpuffer (14, 15) an der Tilgermasse (4) und einen Anschlag (11, 12), an dem der Anschlagpuffer (14, 15) zur Anlage kommt, aufweist,
**dadurch gekennzeichnet, dass** ein Abstand zwischen dem Anschlagpuffer (14, 15) und dem Anschlag (11, 12) in der stabilen Mittellage der Tilgermasse (4) für mindestens eine Bewegungsrichtung veränderbar ist,
wobei die Anschlaganordnung bei einer Veränderung des Abstandes in eine Bewegungsrichtung den Abstand in die entgegengesetzte Bewegungsrichtung gegensinnig gleich verändert.

2. Schwingungstilgeranordnung nach Anspruch 1, **dadurch gekennzeichnet, dass** mindestens ein Anschlagpuffer (14, 15) verstellbar an der Tilgermasse (4) angeordnet ist.

3. Schwingungstilgeranordnung nach Anspruch 1 oder 2, **dadurch gekennzeichnet, dass** die beiden Anschlagpuffer (14, 15) für beide Bewegungsrichtungen gemeinsam verstellbar an der Tilgermasse (4) angeordnet sind.

4. Schwingungstilgeranordnung nach einem der vorhergehenden Ansprüche, **dadurch gekennzeichnet, dass** die jeweiligen Anschläge (11, 12) Anprallkräfte von den jeweiligen Anschlagpuffern (14 ,15) auf die tragende Struktur (2) übertragen.

5. Schwingungstilgeranordnung nach Anspruch 4, **dadurch gekennzeichnet, dass** die Anschläge (11, 12) steif an der tragenden Struktur (2) befestigt sind.

6. Schwingungstilgeranordnung nach einem der vorhergehenden Ansprüche, **dadurch gekennzeichnet, dass** die Anschlagpuffer (14, 15) ein gemeinsames Dämpfungselement (17) aufweisen.

7. Schwingungstilgeranordnung nach Anspruch 6, **dadurch gekennzeichnet, dass** das Dämpfungselement einen Bremsweg definiert, der mindestens 10% der Maximalauslenkung der Tilgermasse (4) entspricht

8. Schwingungstilgeranordnung nach einem der vorhergehenden Ansprüche, **dadurch gekennzeichnet, dass** eine die beiden Anschlagpuffer (14 ,15) verbindende Linie in einem Bereich verläuft, er sich in Schwerkraftrichtung beidseits des Massenschwerpunkts (5) der Tilgermasse (4) erstreckt und in Schwerkraftrichtung eine Ausdehnung von maximal 15% der Höhe der Tilgermasse (4) aufweist.

9. Schwingungstilgeranordnung nach Anspruch 8, **dadurch gekennzeichnet, dass** die Linie in Schwerkraftrichtung unterhalb des Massenschwerpunkts (5) verläuft.

10. Verfahren zum Einrichten einer Schwingungstilgeranordnung (1), insbesondere für hohe schlanke Bauwerke, mit einer tragenden Struktur (2), einer Tilgermasse (4), die einen Massenschwerpunkt (5) aufweist, mindestens einem Rad (6, 7), mit dem die Tilgermasse (4) auf einer konkav gekrümmten, mit der tragenden Struktur (2) verbundenen Schienenanordnung (8) aus einer stabilen Mittellage heraus in zwei entgegengesetzte Richtungen verfahrbar ist, und einer Anschlaganordnung, die für jede Bewegungsrichtung der Tilgermasse (4) auf der Schienenanordnung (8) einen Anschlagpuffer (14, 15) an der Tilgermasse (4) und einen Anschlag (11, 12), an dem der Anschlagpuffer (14, 15) zur Anlage kommt, aufweist,
**dadurch gekennzeichnet, dass** man einen Abstand zwischen dem Anschlagpuffer (14, 15) und dem Anschlag (11, 12) in der stabilen Mittellage der Tilgermasse (4) für mindestens eine Bewegungsrichtung verändert,
wobei man bei der Veränderung des Abstandes in eine Bewegungsrichtung den Abstand in die entgegengesetzte Bewegungsrichtung gegensinnig gleich verändert.

11. Verfahren nach Anspruch 10, **dadurch gekennzeichnet, dass** man eine Position der Anschlagpuffer (14 ,15) an der Tilgermasse (4) verändert.

12. Verfahren nach einem der Ansprüche 10 oder 11, **dadurch gekennzeichnet, dass** man die Tilgermasse (4) in der stabilen Mittellage anordnet und die Anschlagpuffer (14, 15) so an der Tilgermasse (4) anordnet, dass der Abstand zwischen den Anschlagpuffern (14, 15) und den jeweiligen Anschlägen (11, 12) jeweils gleich groß ist.

13. Verfahren nach einem der Ansprüche 10 bis 12, **dadurch gekennzeichnet, dass** für die Anschlagpuffer (14, 15) ein gemeinsames Dämpfungselement (17) verwendet wird.

## Claims

1. A vibration damper arrangement (1), especially for tall, slender structures, with a supporting structure (2), a damper mass (4) having a center of mass (5), at least one wheel (6, 7) by means of which the damper mass (4) is movable, on a concavely curved rail arrangement (8) connected to the supporting structure (2), from a stable central position in two opposite movement directions, and a stop arrangement comprising, for each of the movement directions of the damper mass on the rail arrangement, a stop buffer (14, 15) on the damper mass (4) and a stop (11, 12) against which the stop buffer (14, 15) comes to rest,
**characterized in that** a distance between the stop buffer (14, 15) and the stop (11, 12) in the stable central position of the damper mass (4) is variable for at least one of the movement directions,
wherein the stop arrangement varies, in the case of varying the distance in the one of the movement directions, the distance in the opposite movement direction equally in an opposite manner.

2. The vibration damper arrangement according to claim 1, **characterized in that** at least one stop buffer (14, 15) is arranged adjustably on the damper mass (4).

3. The vibration damper arrangement according to claim 1 or 2, **characterized in that** the two stop buffers (14, 15) are arranged on the damper mass (4) so as to be jointly adjustable for both of the movement directions.

4. The vibration damper arrangement according to any one of the preceding claims, **characterized in that** the respective stops (11, 12) transmit impact forces from the respective stop buffers (14, 15) to the supporting structure (2).

5. The Vibration damper arrangement according to claim 4, **characterized in that** the stops (11, 12) are rigidly attached to the supporting structure (2).

6. The vibration damper arrangement according to any one of the preceding claims, **characterized in that** the stop buffers (14, 15) have a common damping element (17).

7. Vibration damper arrangement according to claim 6, **characterized in that** the damping element defines a braking distance which corresponds to at least 10 % of a maximum deflection of the damper mass (4).

8. The vibration damper arrangement according to any one of the preceding claims, **characterized in that** a line connecting the two stop buffers (14, 15) runs in a region which extends on both sides of the center of mass (5) of the damper mass (4) in a direction of gravity and has an extension in the direction of gravity of 15 % of the height of the damper mass (4) at the maximum.

9. The vibration damper arrangement according to claim 8, **characterized in that** the line runs in the direction of gravity below the center of mass (5).

10. A method for setting up a vibration damper arrangement (1), especially for tall, slender buildings, with a supporting structure (2), a damper mass (4) which has a center of mass (5), at least one wheel (6, 7) by means of which the damper mass (4) is movable, on a concavely curved rail arrangement (8) connected to the supporting structure (2), from a stable central position in two opposite movement directions, and a stop arrangement comprising, for each of the movement directions of the damper mass on the rail arrangement, a stop buffer (14, 15) on the damper mass (4) and a stop (11, 12) against which the stop buffer (14, 15) comes to rest,
**characterized in that** a distance between the stop buffer (14, 15) and the stop (11, 12) in the stable central position of the damper mass (4) is varied for at least one of the movement directions,
wherein, when varying the distance in the one of the movement directions, the distance in the opposite movement direction is varied equally in an opposite manner.

11. The method according to claim 10, **characterized in that** a position of the stop buffers (14, 15) on the damper mass (4) is varied.

12. The method according to claim 10 or 11, **characterized in that** the damper mass (4) is arranged in the stable central position and the stop buffers (14, 15) are arranged on the damper mass (4) such that the distance between the stop buffers (14, 15) and the respective stops (11, 12) is the same, respectively.

13. The method according to any one of the claims 10 to 12, **characterized in that** a common damping element (17) is used for the stop buffers (14, 15).

## Revendications

1. Ensemble amortisseur de vibrations (1), en particulier pour des bâtiments hauts et élancés, comprenant une structure portante (2), une masse d'amortissement (4), qui présente un centre de masse (5), au moins une roue (6, 7), au moyen de laquelle la masse d'amortissement (4) peut être déplacée à partir d'une position centrale stable dans deux directions opposées sur un dispositif de rails (8) à courbure concave relié à la structure portante (2), et un ensemble de butée, qui présente pour chaque direction de mouvement de la masse d'amortissement sur le dispositif de rails un tampon de butée (14, 15) sur la masse d'amortissement (4) et une butée (11, 12) sur laquelle le tampon de butée vient en appui,
**caractérisé en ce qu'**une distance entre le tampon de butée (14, 15) et la butée (11, 12) est modifiable pour au moins une direction de mouvement dans la position centrale stable de la masse d'amortissement (4),
l'ensemble de butée, lors d'une modification de la distance dans une direction de mouvement, modifiant la distance dans la direction de mouvement opposée de manière identique mais de sens opposé.

2. Ensemble amortisseur de vibrations selon la revendication 1, **caractérisé en ce que**
au moins un tampon de butée (14, 15) est disposé de manière réglable sur la masse d'amortissement (4).

3. Ensemble amortisseur de vibrations selon la revendication 1 ou 2, **caractérisé en ce que** les deux tampons de butée (14, 15) pour les deux directions de mouvement sont disposés de manière réglable conjointement sur la masse d'amortissement (4).

4. Ensemble amortisseur de vibrations selon l'une quelconque des revendications précédentes, **caractérisé en ce que** les butées (11, 12) respectives transmettent des forces d'impact des tampons de butée (14, 15) respectifs à la structure portante (2).

5. Ensemble amortisseur de vibrations selon la revendication 4, **caractérisé en ce que** les butées (11, 12) sont fixées de manière rigide à la structure portante (2).

6. Ensemble amortisseur de vibrations selon l'une quelconque des revendications précédentes, **caractérisé en ce que** les tampons de butée (14, 15) présentent un élément d'amortissement (17) commun.

7. Ensemble amortisseur de vibrations selon la revendication 6, **caractérisé en ce que** l'élément d'amortissement définit une distance de freinage qui correspond à au moins 10% du déplacement maximal de la masse d'amortissement (4).

8. Ensemble amortisseur de vibrations selon l'une quelconque des revendications précédentes, **caractérisé en ce qu'**une ligne reliant les deux tampons de butée (14, 15) s'étend dans une zone qui s'étend dans la direction de la gravité des deux côtés du centre de masse (5) de la masse d'amortissement (4) et présente dans la direction de la gravité une extension d'au maximum 15% de la hauteur de la masse d'amortissement (4).

9. Ensemble amortisseur de vibrations selon la revendication 8, **caractérisé en ce que** la ligne dans la direction de la gravité s'étend en dessous du centre de masse (5).

10. Procédé de configuration d'un ensemble amortisseur de vibrations (1), en particulier pour des bâtiments hauts et élancés, comprenant une structure portante (2), une masse d'amortissement (4) qui présente un centre de masse (5), au moins une roue (6, 7) au moyen de laquelle la masse d'amortissement (4) peut être déplacée à partir d'une position centrale stable dans deux directions opposées sur un dispositif de rails (8) à courbure concave relié à la structure portante (2), et un ensemble de butée, qui présente pour chaque direction de mouvement de la masse d'amortissement sur le dispositif de rails un tampon de butée (14, 15) sur la masse d'amortissement (4) et une butée (11, 12) sur laquelle le tampon de butée vient en appui,
**caractérisé par** la modification d'une distance entre le tampon de butée (14, 15) et la butée (11, 12) pour au moins une direction de mouvement dans la position centrale stable de la masse d'amortissement (4), la modification de la distance dans une direction de mouvement modifiant la distance dans la direction de mouvement opposée de manière identique mais de sens opposé.

11. Procédé selon la revendication 10, **caractérisé par** la modification d'une position des tampons de butée (14, 15) sur la masse d'amortissement (4).

12. Procédé selon l'une quelconque des revendications 10 ou 11, **caractérisé par** la disposition de la masse d'amortissement (4) dans la position centrale stable et la disposition des tampons de butée (14, 15) sur la masse d'amortissement (4) de telle manière que la distance entre les tampons de butée (14, 15) et les butées (11, 12) respectives soit respectivement égale.

13. Procédé selon l'une quelconque des revendications 10 à 12, **caractérisé en ce qu'**un élément d'amortissement (17) commun est utilisé pour les tampons de butée (14, 15).
